Europäisches Patentamt

European Patent Office

Office européen des brevets

(19)

(11) Numéro de publication : **0 121 643**
**B1**

(12) **FASCICULE DE BREVET EUROPÉEN**

(45) Date de publication du fascicule du brevet :
**10.02.88**

(51) Int. Cl.⁴ : **A 21 B   1/08,** A 21 B   1/52

(21) Numéro de dépôt : **83870118.3**

(22) Date de dépôt : **10.11.83**

(54) **Four mobile et modulaire à vapeur, à chauffage électrique ou à combustion interne.**

(30) Priorité : **22.11.82 BE 895091**
**14.10.83 BE 10889**

(43) Date de publication de la demande :
**17.10.84 Bulletin 84/42**

(45) Mention de la délivrance du brevet :
**10.02.88 Bulletin 88/06**

(84) Etats contractants désignés :
**CH DE FR GB IT LI LU NL**

(56) Documents cités :
**DE-C-   596 652**
**FR-A- 2 086 606**
**US-A- 2 237 519**

(73) Titulaire : **Magerat, Roger**
**56, Rue Cavée**
**B-1370 Saintes (BE)**

(72) Inventeur : **Magerat, Roger**
**56, Rue Cavée**
**B-1370 Saintes (BE)**

Jouve, 18, rue St-Denis, 75001 Paris, France

EP 0 121 643 B1

## Description

Le but de la présente invention est de proposer un mode de réalisation d'un four destiné à l'industrie alimentaire et permettant de préparer une gamme de produits allant de la boulangerie : pain (grands et petits), baguettes, à la patisserie : croissants, pâtes feuilletées, et à la charcuterie : pâté de viande, pâté en croûte, pizzas, etc. Le pain étant une nourriture de base, fournissant les hydrates de carbone nécessaires au corps humain, il est connu dans toutes les civilisations et tous les pays en croissance ont une population dont l'alimentation est souvent assurée par des mets préparés au four. L'objectif de l'invention est précisément de présenter un mode de construction modulaire, permettant, selon la grandeur de la communauté à nourrir, d'installer un four que l'on peut, à partir d'un élément de base, aisément agrandir par adjonction d'un ou plusieurs éléments supplémentaires identiques à l'élément de base. Ainsi qu'il sera explicité ci-après, le four mobile et modulaire selon l'invention présente un rendement énergétique extrêmement favorable ce qui le rend d'autant plus attractif pour des populations à niveau de vie moins favorisé.

En industrie alimentaire, les modèles de four les plus anciens sont les fours à bois qui nécessitent une construction massive de maçonnerie. A ce modèle primitif ont succédé de nombreux types de fours : fours à brûleurs au gaz ou au mazout, fours électriques et le récent four à micro-ondes plus spécifique à un réchauffement rapide qu'à une vraie cuisson. Les appareils à micro-ondes sont connus et sont, par exemple décrits dans le brevet européen EP-A-0 040 565 (S.F.A.M.O.). Les fours électriques ont une durée de vie limitée à celle de leurs résistances électriques qui sont assez vite attaquées par la corrosion et par les vapeurs de cuisson.

Dans la plupart des cas, les chambres de cuisson (des fours à foyer) sont chauffées par batteries de tubes annulaires. Les chambres de cuisson sont garnies de soles en réfractaire (30 mm d'épaisseur en général) à forte accumulation. Dans les versions récentes, le foyer est à recyclage des gaz chauds. Souvent on a deux brûleurs : un à gauche et un à droite par rapport à la façade du four. Souvent aussi, les façades sont équipées pour permettre l'enfournement semi-automatique par tapis. Les surfaces de cuisson vont de quelques mètres carrés à une vingtaine de mètres carrés. On peut, en cours de construction, faire l'adaptation d'un étage supplémentaire, non aisément ni rapidement détachable de la carrosserie extérieure. En ce sens, il n'existe pas de conception réellement modulaire d'un four permettant soit de superposer les modules soit de les séparer rapidement et de les faire fonctionner chacun avec sa propre source de chaleur en des endroits différents.

L'état de la technique dans le domaine des fours pour cuisson de pain, pâtisserie et produits similaires peut être décrit par le brevet français FR-A-1 558 453 (BONGARD) qui a trait à un chauffage par tubes à vapeur annulaires dont le foyer cylindrique peut pivoter autour de son axe. Le four peut éventuellement être à foyers multiples (page 3 du document cité). Les chambres de cuisson sont chauffées en voûte et en sole par les branches horizontales de tubes annulaires qui sont chauffées par les gaz de combustion. L'échange de chaleur dans le dispositif décrit est loin d'être optimum et son amélioration et sa répartition sont d'ailleurs l'objet du brevet cité. Les dépôts de suie, la corrosion sur les tubes (surtout si les brûleurs sont alimentés en combustible légèrement sulfuré) sont à craindre. Le but de la présente invention est précisément d'apporter une amélioration du coefficient d'échange thermo-cinétique et un contact direct et total net entre la source de chaleur et le faisceau tubulaire tout en évitant de mélanger le circuit des gaz avec celui des tubes (cas de brûleurs à combustibles).

Un autre exemple de four modulaire à étages multiples est le brevet néerlandais NL-A-7 501 672 (BRUNKLAUS & al.) qui décrit un système de chauffage à contre-courant. Une description intéressante d'une installation de panification destinée à des conditions d'utilisation loin des facilités urbaines, est le brevet européen EP-A-0 038 250 (LEGUEU) dans lequel deux véhicules correctement couplés munis de réserve d'eau et de groupe électrogène permettent la fabrication intégrale de pain.

Un exemple de four à plusieurs étages superposables est le brevet américain US-A-2 237 519 (ROBERT P. BOLLING), dont les caractéristiques correspondent au préambule de la revendication principale. Le four comporte une chambre de combustion commune aux différents étages et deux ensembles de circuits de chauffe tubulaires par étage. Les sources énergétiques peuvent éventuellement être indépendantes l'une de l'autre.

Une illustration des circuits de chauffe pour fours est donnée dans le brevet allemand DE-C-596 652 (PRESS und WAZWERK A.G.) et dans le brevet français FR-A-2 086 606 (BONGARD). Le brevet allemand DE-C-596 652 décrit un circuit de chauffe comportant un ensemble de tubes se raccordant à un tube principal dans lequel une résistance électrique immergée crée de la vapeur surchauffée qui est transportée par thermosiphon dans le circuit de chauffe du four. Le brevet FR-A-2 086 606 décrit un four dont la disposition des tubes permet une structure d'assemblage par éléments de four disposés parallèlement à l'axe d'enfournement. L'ensemble est réputé modulaire et est englobé dans un isolant amovible.

Les systèmes connus et évoqués ci-dessus comportent tous des chambres de combustion dont la source énergétique et les gaz de combustion chauffent des tubes qui sont chacun des éléments indépendants constituant une pluralité de circuits de chauffe que l'on peut éventuellement juxtaposer (FR-A-2 086 606). Seul le document allemand (brevet DE-C-596 652) a trait à un circuit de chauffe unique fait d'une pluralité de tubes se raccordant à un tube de plus grand diamètre à l'intérieur duquel a lieu la création de vapeur surchauffée à l'aide d'une résistance électrique.

La présente invention propose un four caractérisé par les éléments de la seconde partie de la revendication principale. Des caractéristiques secondaires sont exprimées dans les revendications dépendantes.

Le caractère modulaire selon l'invention provient du fait qu'un four est vu comme un empilement de plusieurs étages identiques dont chacun a son propre circuit de chauffe unique et sa propre source énergétique avec sa propre alimentation et, le cas échéant, sa propre sortie de gaz. D'autre part, le circuit de chauffe selon l'invention a la particularité de comporter un ensemble de tubes et deux tubes concentriques et d'être unique.

Les inconvénients des systèmes connus ci-dessus évoqués sont évités par le dispositif selon l'invention qui sera précisé par référence aux dessins 1 à 7.

Dans ces dessins :

Les figures 1 et 2 sont une vue frontale d'un four modulaire et de ses modules d'isolation supérieur et inférieur.

Les figures 3 et 4 illustrent la configuration du circuit de chauffe.

Les figures 5 a, b et c sont une illustration schématique de 3 configurations possibles pour le circuit de chauffe.

La figure 6 est une coupe transversale dans le cylindre principal constitué de 2 cylindres concentriques dont le compartiment intérieur contient un ou plusieurs éléments chauffants.

La figure 7 illustre la configuration du circuit de chauffe muni d'un vase d'expansion dans le cas de l'emploi d'un fluide caloporteur.

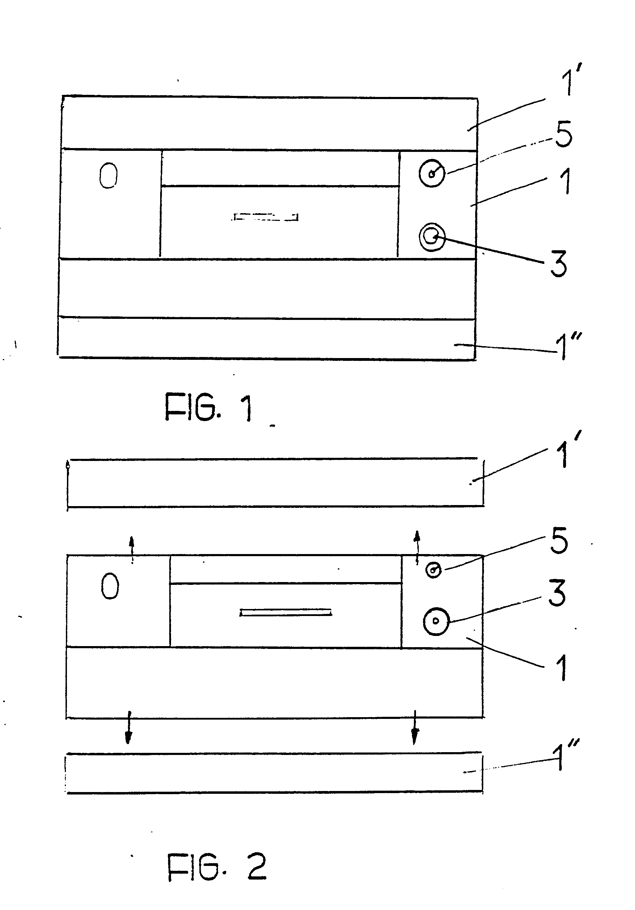

La figure 1 représente un four modulaire 1. Ce four a la forme d'un parallélépipède et est mobile si ce module chauffant est monté sur quatre pieds à roulettes permettant sa translation et sa rotation. Aux figures 1 et 2, on voit que le module de chauffe est muni d'un module d'isolation inférieur 1″ et d'un module d'isolation supérieur 1′ : il s'agit chaque fois d'un assemblage en tôle intérieurement garni d'une matière isolante (laine de verre ou autre...). Comme on le voit, les deux parties inférieure et supérieure sont détachables. Si bien que l'on pourrait réaliser un four à deux soles à l'aide, de bas en haut, d'un assemblage de 1″, deux modules de chauffe (source d'énergie indépendante) superposés et surplombés par l'élément isolant 1′. Les dimensions réalisées pour un petit module sont (60 × 60) cm² de surface la hauteur étant de 20 cm. En partant d'un tel petit module (Fig. 1), l'opération d'adjonction d'un second module comme on vient de l'évoquer ne demande qu'un temps de travail d'une demi-heure. En ce sens, on peut, par rapport à ce qui est connu, réellement employer le vocable « modulaire » pour les systèmes selon l'invention. Un petit four, tel que celui mentionné ci-avant, peut cuire 4 à 6 pizzas suivant leur dimension, en 15 minutes, la puissance maximum appelée est de 2,5 kW et l'énergie totale nécessaire est de 3 kWH. Le même four dont le cylindre principal contient un brûleur à mazout donne le même temps de cuisson si le brûleur a une puissance de 0,8 Kcal/H.

Le système de chauffage par circuit fermé et cylindre de vapeur concentrique, à un ou des cylindres de chauffe selon l'invention, a pour résultat que la puissance maximum appelée par mètre carré de la surface totale du four (sole, parois latérales et ciel) est de 4 kW/m².

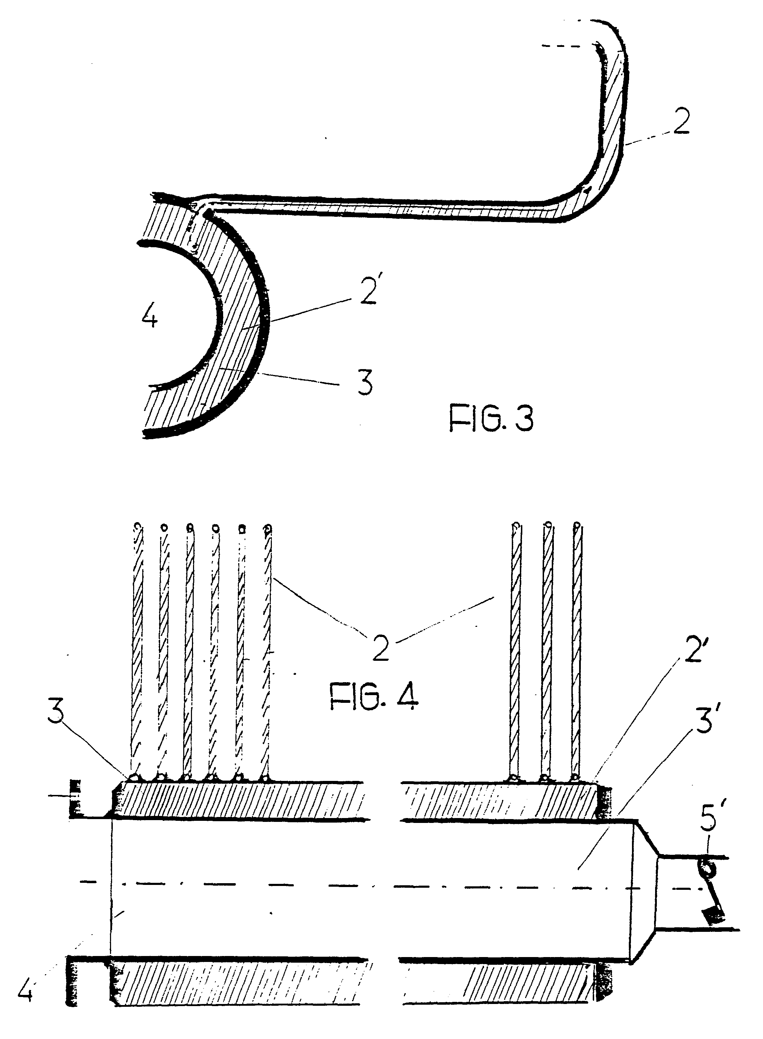

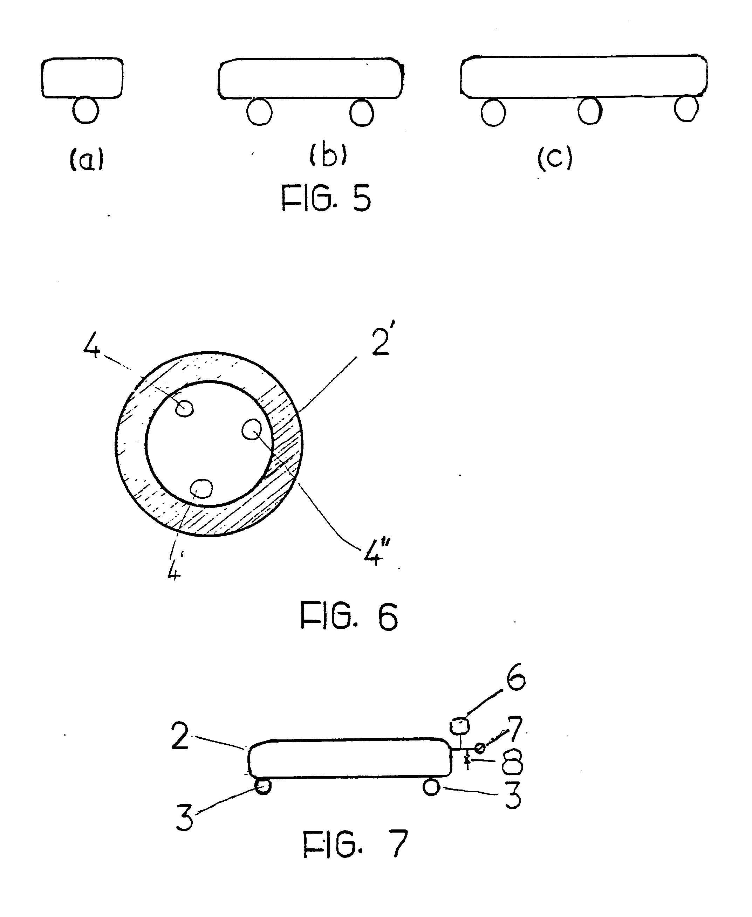

On comprendra aisément la raison de la possibilité de ces rendements énergétiques intéressants en se rapportant aux figures 3 et 4 où l'on voit que deux cylindres concentriques formant un espace annulaire 3 sont utilisés. Ils sont situés soit au milieu et à l'aplomb de la sole inférieure (cas des Fig. 3 et 5a), soit sur le côté de cette dernière (Fig. 1 et 2 par exemple), soit encore (Fig. 5b et c) sous la sole inférieure et au nombre de deux ou trois. Dans le compartiment interne 3′ du cylindre principal on dispose une thermorésistance à filaments dont les éléments sont en contact direct avec l'espace annulaire 3 (carotte de chauffage). L'eau 2′ située dans l'ensemble tubulaire 2 et le remplissant seulement à 40 % est en échange direct avec la carotte de chauffage, la densité superficielle de flux thermique étant optimum. L'ensemble tubulaire est constitué d'une série de tubes équidistants, l'intervalle entre les tubes est le même que leur diamètre extérieur. Dans ces conditions, on se rendra compte (voir Fig. 3 et 4) que dans le volume constitué par l'espace annulaire 3 et le faisceau des tubes 2 parallèles formant des boucles et se raccordant chacun par soudure à l'espace annulaire 3, se forme une vapeur surchauffée. Cette vapeur en circuit fermé transmet à l'enceinte du four de la chaleur, principalement par convection. Il est bien connu que les facteurs influençant la transmission thermique sont :

1. Les propriétés physiques du liquide ou du gaz (viscosité, masse et chaleur spécifique, conductibilité thermique) ;
2. La vitesse linéaire de déplacement du fluide ;
3. Le type de débit (laminaire ou turbulent) ;
4. La forme de la surface d'échange ;
5. La rugosité des parois.

Les cinq points évoqués ci-dessus ont été pris au mieux en considération dans le principe de la présente invention. La figure 6, en particulier, montre une coupe transversale dans le cylindre principal où, dans la partie gauche du dessin, une source de chaleur est disposée coaxialement. La transmission de chaleur a lieu avec une symétrie cylindrique ce qui est (après la sphère inconcevable dans le cas présent) le meilleur mode géométrique d'échange. Dans l'enceinte de la vapeur surchauffée, on atteint rapidement et sans heurt, la vitesse linéaire de l'ordre de 2 m/sec. On atteint dans le four, surveillé par le thermostat 5 (Fig. 1 et 2) en 7 minutes une température de 40°. Après 20 minutes, on est à 50 °C, 225 °C sont atteints en 35 minutes, 250 °C en 40 minutes. La vapeur surchauffée peut d'ailleurs prendre un ensemble de valeurs de température et de pression donné par le diagramme de Mollier. Avec les aciers actuels on peut arriver, en température à des valeurs limites de 550 °C.

L'avantage du chauffage direct par l'un quelconque des éléments chauffants, 4 (gaz), 4′ (électricité) ou 4″ (fuel oil domestique) (voir Fig. 6) est qu'il peut être employé séparément ou simultanément selon les circonstances. Il n'est plus nécessaire, en cas de panne, de pénétrer dans le four pour remplacer une résistance ou un brûleur défectueux : tout se fait en retirant simplement le cylindre de chauffage d'ailleurs extérieur à l'espace chauffé. En cas de plus gros fours à chauffer on disposera donc plusieurs sources de chaleur (en général trois ou un multiple de trois pour garder la flexibilité du choix du mode de chauffage). Pour des sources énergétiques donnant lieu à combustion interne (tel que 4 et 4″) on disposera de moyen 5′ de réglage de l'échappement des gaz de combustion.

Une autre disposition (Fig. 6) consiste à réserver le centre pour un brûleur supplémentaire au gaz ou au mazout.

Lorsqu'on veut atteindre des températures supérieures, il y a un double inconvénient à l'emploi de l'eau : la pression saturante augmente avec la température.

Pour remédier à ces inconvénients, il est proposé d'utiliser un fluide caloporteur. Les avantages essentiels liés à l'usage d'un tel composé organique (en général de la famille des polyphényles) sont au nombre de quatre : la chaleur massique est importante, de même que le coefficient d'échange thermo-cinétique ; par ailleurs, la pression d'emploi est petite et les prix d'achat sont intéressants. Il faut ajouter, qu'en exploitation, aucune corrosion, ni la moindre salissure n'arrive dans les circuits.

Pour l'utilisation d'un fluide caloporteur dans le circuit tubulaire d'un four mobile et modulaire selon l'invention, il est indispensable que les dangers d'incendie et de toxicité soient nuls. Le développement important de la technique physico-chimique a mis sur le marché des produits dont le point éclair est plus haut que les températures d'utilisation. L'absence de corrosion renforce la sécurité des circuits tubulaires 2 dont le manomètre 7 (voir fig. 7) situé après le vase d'expansion 6, peut être muni d'un avertisseur sonore se déclenchant si la pression venait à tomber sous une certaine valeur préfixée.

L'expérience a montré la validité de l'application proposée du fait que la distribution de chaleur est uniforme comme avec l'eau, la montée en température du four étant, d'autre part, plus rapide. En fait, le circuit de chauffage selon l'invention, est identique à celui d'un chauffage central d'habitation dont le four serait la charge thermique.

En particulier, l'adaptation d'une vanne thermostatique sur le circuit, en amont du four, s'est révélée source d'économie d'énergie.

Comme déjà souligné ci-dessus, il va de soi que les sources de chaleur (4, 4′, 4″), concentriques (voir fig. 6) n'ont aucun contact avec l'enceinte chauffée où aboutissent les tubes. Dans tous les cas, l'échauffement se fait le long de l'espace annulaire 3 : le chauffage par résistance électrique donne une uniformité totale au transport thermique. Le chauffage par un, trois, ou un multiple de trois brûleurs à gaz ou à gas-oil employés ou non simultanément donne lieu, du fait que la combustion interne a un champ de températures non uniforme, à une circulation plus turbulente. Comme il a été évoqué plus haut, on peut avantageusement compléter le réglage correct de la combustion des brûleurs par l'adjonction d'une vanne thermostatique réalisant ainsi avec le thermostat des brûleurs une régulation en cascade telle que les turbulences et les vibrations du fluide circulant soient minimes.

## Revendications

1. Four mobile et modulaire à éléments modulaires accouplables en hauteur, dans lequel chaque élément modulaire comporte une partie centrale qui constitue le module de chauffe lequel est un circuit de chauffe dans lequel circule un fluide caloporteur ou de la vapeur, circuit fait d'un ensemble de tubes (2) parallèles et d'un cylindre principal (3, 3′), partie centrale par ailleurs disposée dans un module d'isolation caractérisé en ce que le module d'isolation se compose de modules d'isolation supérieurs (1′) et inférieurs (1″) qui sont détachables aisément de façon à pouvoir accoupler l'une à l'autre en hauteur les parties centrales (1) du four, en ce que le circuit de chauffe est défini à l'aide dudit cylindre principal constitué de deux cylindres concentriques qui créent donc entre eux d'une part un espace annulaire (3) et d'autre part une partie centrale cylindrique ou compartiment intérieur (3′), en ce que chacun des tubes (2) parallèles se raccordent individuellement par soudure à l'espace annulaire (3), et en ce que dans le compartiment (3′) se trouvent une ou des sources de chaleur notamment électriques servant à assurer, par conduction et convection thermique, la réalisation dans le circuit de chauffe d'un transport calorifique permettant la montée en température de l'enceinte du four.

2. Four selon la revendication 1 caractérisé en ce que le compartiment intérieur (3′) est occupé par une thermorésistance à filament formant une carotte de chauffage qui se glisse dans le compartiment (3′).

3. Four selon la revendication 2 caractérisé en ce que l'ensemble des sources de chaleur (4, 4′, 4″) sont disposées dans l'espace annulaire (3) du cylindre principal tandis que le compartiment intérieur (3′) est réservé à un brûleur (gaz ou fuel-oil domestique) supplémentaire.

4. Four selon l'une quelconque des revendications 1 à 3 caractérisé en ce que le circuit de chauffe est un faisceau tubulaire raccordé à l'espace annulaire (3) qui est rempli soit de vapeur surchauffée soit d'un fluide caloporteur, les variations de température et de pression étant contrôlées par un vase d'expansion (6) et une vanne thermostatique réalisant avec le thermostat (5) des brûleurs une régulation en cascade telle que la turbulence et les vibrations dues à la circulation soient minimes.

5. Four selon les revendications ci-dessus caractérisé en ce qu'il peut être utilisé en simple générateur de vapeur moyennant l'adjonction des dispositifs d'alimentation en eau et de régulation de température et de pression usuels dans les chaudières industrielles.

## Claims

1. A modular and mobile oven structure of the same type as, for instance, that of the U.S. patent 2 237 519 (BOLLING) comprising a central part which constitues the heating unit which is a circuit wherein a heat transfer fluid or a vapour circulates, this circuit being made of a plurality of parallel tubes 2 and of an annularprincipal cylinder 3, circuit further similar to the heating system disclosed in the German patent 596 652 (Press und Walzwerk A.G.), the circuit being embodied in an upper (1') and a lower (1") insulating modules, these modules being easily disconnected so that the central rooms of the oven can be set vertically upon one another, the total oven structure being characterized by the fact that the heating circuit is defined by means of two concentric cylinders so disposed that they form an annular space 3 and an inner compartment 3', the heating circuit is further characterized by a plurality of parallel tubes 2 which are individually welded to the cylinder 3 whereof the internal compartment 3' has one or more heating sources (electrical, gas fuel) which are aimed to achieve by thermal conductivity or by convection, a heat transfer which increases the temperature inside the oven.

2. Oven structure according to claim 1 characterized by the inner compartment 3' in which a heating resistance is set having the shape of a heating rod which can slide in the compartment 3'.

3. Oven structure according to claim 2 characterized by a plurality of heating sources (4, 4', 4") being disposed in the annular space of the main cylinder 3 whereas an additionnal burner (gas or fuel) is located in the inner compartment 3'.

4. Oven structure according to one of the foregoing claims 1 to 3 characterized by the fact that the heating circuit is a tubular bundle which is connected to the main annular cylinder 3, which is filled with over-heated vapour or with a heat transfer fluid, the temperature- and pressure variations being damped by an expansion vessel 6 and a thermostatic valve which together with

the thermostat of the burners ensures a cascade control so that the vibration and circulation turbulences are very small.

5. Oven structure according to the foregoing claims characterized by the fact that it can be utilized as a simple heat generator provided that it is suitably fitted with water feeding means and with temperature and pressure controls similar to those used in industrial boilers.

## Patentansprüche

1. Beweglicher und stapelnender Backofen wie er zum Beispiel im U.S.A. Patentschrift (BOLLING) geschrieben wird mit einem zentralen Teil der die Heizungeinheit bildet die ein Kreis ist in welchem eine Wärmeübertragende Flussigkeit oder Dampf strömt wobei dieser Kreis aus einer Menge von parallelen Röhren (2) und von einem hauptringförmigen Zylinder (3) besteht und eine Dampfheizrohranordnung bildet wie sie im Deutschen Patentschrift 596 652 (Press und Walzwerk) erläutert wird ; dieser Kreis ist übrigens in zwei oberen (bzw. unteren) Wäremeisolierungen 1' (bzw. 1") zusammengefasst wobei nach Entfernung der beiden Isolierungen 1' und 1", die zentralen Heizanordnungen 1 des Ofen in der Höhe mit einander leicht gekoppelt werden können, Backofen dadurch gekennzeichnet dass der Heizungskreis aus einem mit zwei konzentrischen Zylindern versehenen Hautzylinder besteht die einen ringförmigen Raum (3) und einen zentralen zylindrischen Teil oder inneren Abschnitt (3') bilden ; der Heizungkreis wird mit einer Menge von parallelen Rohren (2) definiert die alle einzeln am Zylinder (3) gelötet sind ; im Abschnitt (3') werden eine oder mehrere Heizungsquellen (gas oder elektrische Heizung) angeordnet dié durch Wärmeleitfähigkeit und thermischen Transport ein Wärmeübertragendes Netz bilden so dass die Temperatur im Backofen steigt.

2. Backofen nach Patentanspruch 1 dadurch gekennzeichnet dass der innere Teil (3') mit einem elektrischen Wiederstand, mit Heizfaden, versehen ist und dass dieser Wiederstand eine solche Form hat dass er sich im Abschnitt (3') gleiten lässt.

3. Backofen nach Patentanspruch 2 dadurch gekennzeichnet dass die verschiedenen Heizungsquellen (4, 4', 4") im ringförmigen Raum des Hauptzylinder 3 angeordnet sind und dass der innere Abschnitt 3' für einen Brenner (gas- oder fuel-oil-) vorgesehen ist.

4. Backofen nach einem der vorhergehenden Ansprüche 1 bis 3 dadurch gekennzeichnet dass der Heizungkresiaus einem sich am ringförmigen Hauptzylinder 3 anschliessenden Rohrsystem bestht das mit übergeheiztem Dampf oder mit einem Wärmeübertragenden Material gefüllt ist wobei die Temperatur (oder Druck) Aenderungen mit einem Ausdehnungsgefass 6 abgenommen sind ; ein thermostatsches Ventil und der Thermostat des Brenners sind so zusammen geschaltet dass die Turbulenz und die Erschütterungen des

9 0 121 643 10

Kreislaufes in der Anlage minimal sind.

5. Backofen nach einem der vorhergehenden Ansprüche dadurch gekennzeichnet dass er wie ein Dampfgenerator benützt werden kann wenn man (wie für industriellen Kesseln) Wasserzuführungsmittel, Temperatur- und Druckregulatoren zusätzlich anpasst.

FIG. 1

FIG. 2

FIG. 3

FIG. 4

(a)　　　　　(b)　　　　　(c)

FIG. 5

4　　　　　2'

4'　　　4"

FIG. 6

6

2　　　7

8

3

3

FIG. 7